# EUROPEAN PATENT SPECIFICATION

(11) **EP 0 764 097 B1**
(45) Date of publication and mention of the grant of the patent: **08.09.1999**
(21) Application number: 95921910.6
(22) Date of filing: 09.06.1995
(51) Int. Cl.: B60R 22/28

(54) **VEHICLE SAFETY RESTRAINTS**
SICHERHEITS-RÜCKHALTESYSTEME FÜR FAHRZEUGE
SYSTEME DE RETENUE DE SECURITE POUR VEHICULE

(30) Priority: 11.06.1994 GB 9411748
(43) Date of publication of application: 26.03.1997
(73) Proprietor: BREED AUTOMOTIVE TECHNOLOGY, INC., Lakeland, County of Polk, Florida (US)
(72) Inventor: BELL, John, Carlisle Cumbria CA2 6QU (GB); BLACKADDER, David, Cumbria (GB)
(74) Representative: Freeman, Jacqueline Carol
(86) International application number: GB9501364
(87) International publication number: WO9534449

(56) References cited:
- EP-A- 0 404 075
- EP-A- 0 481 188
- DE-A- 2 215 892
- DE-A- 3 733 611
- DE-A- 3 932 417
- DE-A- 4 214 222
- FR-A- 2 230 189
- GB-A- 2 267 592
- US-A- 4 258 934
- PATENT ABSTRACTS OF JAPAN vol. 14, no. 221 (M-0971) 10 May 1990 & JP,A,02 053 653 (NISSAN MOTOR CO LTD) 22 February 1990

## Description

This invention relates to vehicle passenger safety restraints and relates especially to safety restraints which are fitted with force limiting means.

It has already been proposed to provide vehicle passenger safety belts with force limiting means which can limit the force exerted on the occupant by a belt during a crash whilst still sufficiently restraining movement of the occupant within the vehicle to avoid serious injury. By limiting the force exerted on the occupant the risk of injury by the belt itself is reduced. Such force limiting can be provided by means which permits controlled extension of the effective length of restraint when a predetermined reaction force tends to be exceeded and by thereby progressively absorbing energy from the occupant can limit the reactive force.

A number of examples of force limiting devices are described in EP-A-0 568 327.

Even when force limiting is provided in the foregoing manner, if the vehicle is additionally fitted with an inflatable restraint for one or more of the occupants such as is now known as an "air bag", it is possible that the combined forces exerted on an occupant by the "air bag" and the safety restraint will exceed safe limits and may as a consequence, result in injury to an occupant. The present invention therefore seeks to provide a passenger safety restraint in which such a shortcoming is reduced or overcome.

According to the present invention there is provided a vehicle passenger safety restraint arrangement comprising a sensor for detecting conditions indicative of a crash situation, a first safety restraint for constraining movement of a vehicle occupant relative to a vehicle, the first restraint being responsive to the sensor, force limiting means (8) to limit the force exerted by the first restraint during constraint of an occupant, characterised in that the force limiting means (8) is responsive to a signal indicative of deployment of a further restraint, wherein the first restraint is a seat belt (7, 4, 6) and wherein the further restraint is an airbag.

EP-A-0 404075 which comprises the features disclosed in the preamble of claim 1, describes a seat belt retractor in combination with an airbag and uses force limiting means for the belt but the force limiting will be deployed regardless of the deployment of the airbag.

The force limiting means may be deployable by a catch or other device which is actuated by said signal indicative of deployment of the air bag.

Said force limiting means may be arranged to be deployed by means of a device which capsizes a mechanical by-pass and where the mechanical by-pass includes a catch the by-pass may be arranged to come under tension only in the event of a predetermined force being exceeded.

In order that the invention may be more clearly understood and readily carried into effect the same will now be further described in more detail with reference to examples given with reference to the accompanying of which:-
Fig. 1, illustrates a vehicle passenger safety restraint with a force limiter
Fig. 2, illustrates a controlling mechanism for a safety restraint in accordance with the invention
Figs. 3, 4, 5, 6 and 7, illustrate variants on a safety restraint in accordance with the invention.

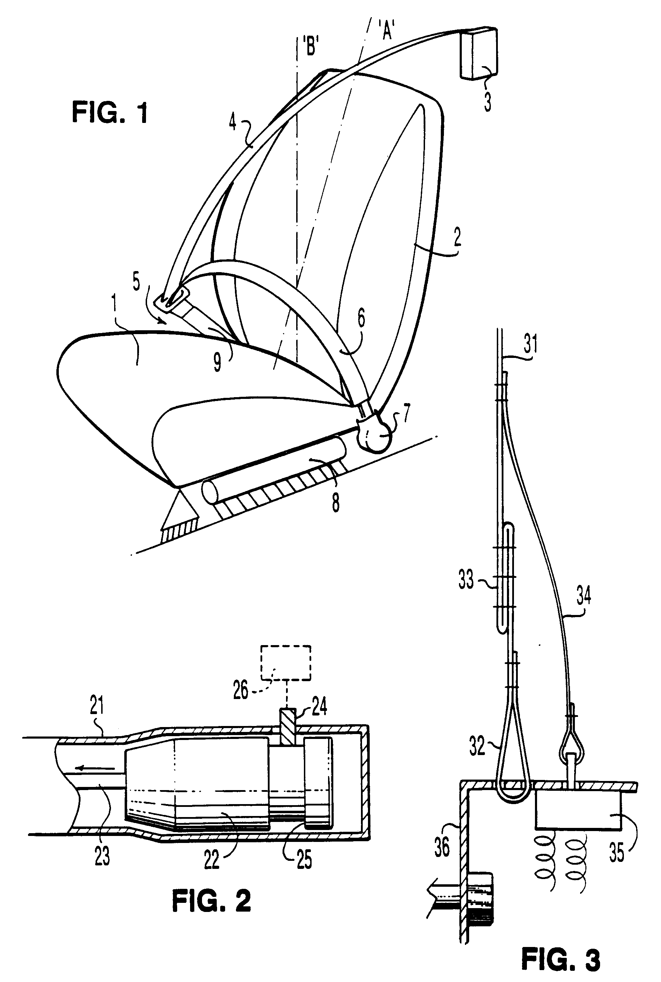

Referring to Fig. 1, the vehicle passenger restraint system includes a seat having a seat squab portion 1 and a seat back portion 2, the latter typically being manually tiltable in a conventional manner. Assuming the seat is installed as a front seat in a passenger car, the restraint webbing is fed out from an emergency locking type of webbing retractor, concealed in the "B" post of the car body at one side of the seat and exits via a shoulder height guide loop at 3 to pass diagonally, as at 4, downwards across the torso of an occupant and through a buckling tongue 5 engaged in a buckle 9 anchored on the other side of the seat. Webbing 6 coming away from the buckling tongue passes across the lap of the occupant to a connection to an anchoring means 7 on the same side as 3, nearest the viewer of the drawing. The anchoring means 7 incorporates a force limiting device 8 designed and constructed to submit in a controlled manner to a predetermined limited force value by way of movement whilst sustaining force up to said value.

Considering now the operation of the system, in the event of a frontal collision being encountered by the vehicle the emergency locking retractor senses a predetermined deceleration value of the vehicle and the retractor locks the webbing portion 4 against withdrawal movement via the guide 3. As the collision progresses the deceleration value increases as do the inertial forces exerted by the occupant on the belt portion 4 and the belt portion 6 of the restraint. When the tension in the portion 6 attains a predetermined force limit value (typically 5KN) the force limiting device 8 submits to such initial maximum force to the extent of permitting payout whilst maintaining no more than such force as a restraining force at the anchorage 7. Such payout allows a few centimetres of forward movement of the portion 4 and the occupant and since some sliding of the belt can occur at the buckle tongue 5, forward movement has the effect of transferring kinetic energy of the occupant progressively as power to the force limiting device and thereby limiting the level of the impulsive forces applied to the occupant by the safety restraint webbing and also thereby reducing the probability of head and neck injury occurring.

In the drawing (Fig. 1), diagrammatic illustration is given of the extent of torso movement (A) of a seat occupant with a force limiting device fitted to the restraint system and the extent of torso movement (B) of an occupant restrained by a system without such a restraint fitted. In (A) the hips of an occupant are permitted to move in a controlled manner due to the limiter introducing slack to the lap portion of the belt. The upper torso then tends to move in a translational manner rather than pivoting excessively about the hips. Forward movement of the occupants head and chest is thereby less as also are the sustained belt forces.

In a modern safety restraint system as indicated above it may be desirable to provide such a safety restraint in addition to an air bag in order to meet statutory requirements in various countries of the world. However deployment of a safety restraint such as that of Fig. 1 together with an air bag may result in excessive restraining forces being applied to the occupant in the event of a crash. With a view to avoiding this the seat belt is provided with force limiting means which when the air bag is deployed is operable at a force which is appreciably lower than the above described 5KN.

Referring to Fig. 2, the force limiting device 8 associated with the seat belt anchorage 7 of Fig. 1 may comprise a deformable tube 21 such as described with reference to Fig. 8 of the above mentioned published EP-A-0 568 327 and a deforming member 22 which can be drawn along the tube when a predetermined belt tension is applied thereto by a cable 23. In accordance with one aspect of the invention, the member 22 is locked within the tube by a detent 24 which normally engages with an annular groove 25. This detent 24 is releasable by an electrical or pyrotechnically operable device 26 which is actuatable by an electric system for producing a release signal when the air bag is also deployed. By such means the force limiter is operable only on deployment of the passenger air bag.

Referring to Fig. 3, instead of employing a deformable tube to limit the force in the event of deployment of the further restraint or air bag the known concept of "tear-webbing" may be employed. In a force limiter employing tear-webbing a short section 33 of the seat belt webbing near the anchorage is folded back on itself and stitched in a manner to progressively capsize when a predetermined force is applied. In Fig. 3 the main body of webbing 31 terminates in an eye 32 which is attached to an anchorage bracket 36. This main body incorporates a force limiter in the form of the tear-webbing section 33 near the anchorage. As one with the main body 31 of webbing there is an inhibiter strap of webbing 34 which is normally not under tension, this strap being anchored to the bracket by a releasable electric catch 35. The catch 35 is normally under no tension and is thereby arranged to be readily and freely releasable by an electrical signal indicative of air bag deployment. However in the absence of such a signal as soon as the force attains the force limiting value causing capsize of the tear-webbing to commence, the strap 34 comes under tension and inhibits any appreciable force limiting action by the tear-webbing 33.

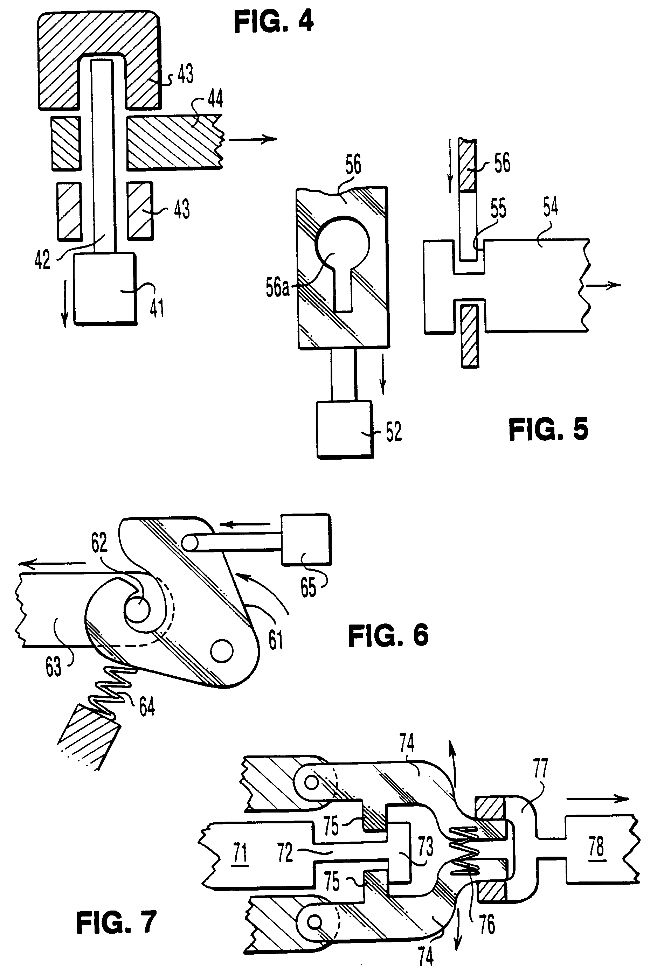

An alternative catch mechanism which may be readily adapted to replace the wedge or detent of Fig. 1 or indeed the catch 35 of Fig. 3, may comprise a locking pin device such as illustrated in Fig. 4. An electrically operable actuator 41 is connected to a pin 42 which passes through the housing or bracket 43 via the member 44 to be retained. On signalling of the actuator 41 upon deployment of an air bag, the actuator withdraws the pin 42 to release the member 44.

A further alternative mechanism such as shown in Fig. 5 has a member 54 to be retained, provided with an annular groove 55 which is normally engaged by a key-hole plate 56 with a key-hole aperture 56a movable in its own plane by the actuator 57 to release the member 55 in response to a signal indicative of deployment of an air bag.

A further mechanism such as shown in Fig. 6 has spring-loaded pivotally movable catch 61 shaped to normally hold a transverse pin 62 carried by the member 63 which is to be retained. The catch 61 is displaceable against the action of spring 64 by an electrically operable actuator 65 in response to a signal indicative of deployment of an air bag.

Yet another mechanism which is particularly applicable to the force limiting mechanism of Fig. 2 is shown in Fig. 7. In this case the forming member 71 has an extension 72 with a head 73 which is retained in position axially by a pair of mutually outwardly spring-loaded pivotally carried jaws having inwardly projecting detents 75 which axially retain the head 73. The outer ends of jaws 74 are normally retained together against the spring 76 by a ring or yoke 77. The ring or yoke 77 is easily axially movable by an electrical actuator 78 allowing the jaws 74 to separate to release the head 73 and therefore the member 71, to enable the force limiter.

## Claims

1. A vehicle passenger safety restraint arrangement comprising a sensor for detecting conditions indicative of a crash situation, a first safety restraint for constraining movement of a vehicle occupant relative to a vehicle, the first restraint being responsive to the sensor, force limiting means (8) to limit the force exerted by the first restraint during constraint of an occupant, characterised in that the force limiting means (8) is responsive to a signal indicative of deployment of a further restraint, wherein the first restraint is a seat belt (7, 4, 6) and wherein the further restraint is an airbag.

2. A vehicle passenger safety restraint arrangement according to claim 1 comprising a catch for deploying the force limiting means (8), which catch is actuated by the signal indicative of deployment of the further restraint.

3. A vehicle passenger safety restraint arrangement according to any one of the preceding claims comprising a mechanical bypass (34) and a device for capsizing the mechanical bypass (34) for deploying the force limiting means (8) in response to the signal indicative of deployment of the further restraint.

4. A vehicle passenger safety restraint arrangement according to claim 3 wherein the mechanical bypass (34) includes a catch (35).

5. A vehicle passenger safety restraint arrangement according to claim 3 or claim 4 wherein the bypass (34) is arranged to come under tension only in the event of a predetermined force being exceeded.

6. A vehicle passenger safety restraint arrangement according to any preceding claim wherein the force limiting means (8) is deployed at a predetermined force of less than 5KN.

7. A vehicle passenger safety restraint arrangement according to any preceding claim wherein the force limiting means comprises a deformable tube (21) and a deforming member (22) mounted therein and arranged to deform the tube (21) when a predetermined belt tension is applied, and in response to a signal indicative of deployment of the further restraint.

8. A vehicle passenger safety restraint arrangement according to claim 7 wherein the force limiting means (8) comprises a detent (24) adapted to engage with an annular groove (25) to lock the deforming member (22) within the tube (21).

9. A vehicle passenger safety restraint arrangement according to claim 10 wherein the detent (24) is releasable by an electrical or pyrotechnically operable device (26).

10. A vehicle passenger safety restraint arrangement according to any one of claims 2 to 11 wherein the force limiting means (8) is associated with a buckle fastening point (5) of a three point seat belt.

11. A vehicle passenger safety restraint arrangement according to any preceding claim wherein the safety restraint comprises pretensioning means and the force limiting means is incorporated in the pretensioning means.

12. A vehicle passenger safety restraint arrangement according to any one of the preceding claims wherein the force limiting means (8) comprises a portion (33) of the seat belt (31) which is folded and fastened by stitching, which stitching is arranged to tear when subjected to a predetermined force, and in response to a signal indicative of deployment of the further restraint.

## Patentansprüche

1. Fahrzeuginsassen-Sicherheitsrückhalteanordnung, die folgende Komponenten umfaßt: einen Sensor zum Feststellen von Bedingungen, die eine Crash-Situation anzeigen, ein erstes Sicherheitsrückhalteelement zur Beschränkung der Bewegung eines Fahrzeuginsassen im Verhältnis zu einem Fahrzeug, wobei das erste Rückhalteelement auf den Sensor anspricht, Kraftbegrenzungsmittel (8) zur Begrenzung der Kraft, die durch das erste Rückhalteelement während der Bewegungsbeschränkung eines Fahrzeuginsassen ausgeübt wird, dadurch gekennzeichnet, daß das Kraftbegrenzungsmittel (8) auf ein Signal anspricht, das die Entfaltung eines weiteren Rückhalteelements anzeigt, wobei das erste Rückhalteelement ein Sicherheitsgurt (7, 4, 6) ist und wobei das weitere Rückhalteelement ein Airbag ist.

2. Fahrzeuginsassen-Sicherheitsrückhalteanordnung nach Anspruch 1, die eine Arretierung für die Entfaltung des Kraftbegrenzungsmittels (8) umfaßt, wobei die Arretierung durch das Signal ausgelöst wird, das die Entfaltung des weiteren Rückhalteelements anzeigt.

3. Fahrzeuginsassen-Sicherheitsrückhalteanordnung nach einem der vorhergehenden Ansprüche, die eine mechanische Umgehung (34) und eine Vorrichtung zum Umdrehen der mechanischen Umgehung (34) zur Entfaltung des Kraftbegrenzungsmittels (8) in Reaktion auf das Signal umfaßt, das die Entfaltung des weiteren Rückhalteelements anzeigt.

4. Fahrzeuginsassen-Sicherheitsrückhalteanordnung nach Anspruch 3, bei der die mechanische Umgehung (34) eine Arretierung (35) einschließt.

5. Fahrzeuginsassen-Sicherheitsrückhalteanordnung nach Anspruch 3 oder Anspruch 4, bei der die Umgehung (34) so angeordnet ist, daß sie nur für den Fall unter Spannung kommt, daß eine vorher festgelegte Kraft überschritten wird.

6. Fahrzeuginsassen-Sicherheitsrückhalteanordnung nach einem der vorhergehenden Ansprüche, bei der das Kraftbegrenzungsmittel (8) bei einer vorher festgelegten Kraft von weniger als 5 kN entfaltet wird.

7. Fahrzeuginsassen-Sicherheitsrückhalteanordnung nach einem der vorhergehenden Ansprüche, bei der das Kraftbegrenzungsmittel ein verformbares Rohr (21) und ein Verformungselement (22) umfaßt, das darin angebracht und so angeordnet ist, daß es das Rohr (21) bei Ausübung einer vorher festgelegten Gurtspannung und in Reaktion auf ein Signal verformt, das die Entfaltung des weiteren Rückhalteelements anzeigt.

8. Fahrzeuginsassen-Sicherheitsrückhalteanordnung nach Anspruch 7, bei der das Kraftbegrenzungsmittel (8) eine Raste (24) umfaßt, die mit einer Ringnut (25) ineinandergreifen kann, um das Verformungselement (22) innerhalb des Rohres (21) zu arretieren.

9. Fahrzeuginsassen-Sicherheitsrückhalteanordnung nach Anspruch 8, bei der die Raste (24) durch eine elektrisch oder pyrotechnisch funktionierende Vorrichtung (26) freigegeben werden kann.

10. Fahrzeuginsassen-Sicherheitsrückhalteanordnung nach einem der Ansprüche 2 bis 9, bei der das Kraftbegrenzungsmittel (8) einem Schnallenbefestigungspunkt (5) eines Dreipunkt-Sicherheitsgurtes zugeordnet ist.

11. Fahrzeuginsassen-Sicherheitsrückhalteanordnung nach einem der vorhergehenden Ansprüche, bei dem das Sicherheitsrückhaltesystem Vorspannmittel umfaßt und das Kraftbegrenzungsmittel in das Vorspannmittel einbezogen ist.

12. Fahrzeuginsassen-Sicherheitsrückhalteanordnung nach einem der vorhergehenden Ansprüche, bei dem das Kraftbegrenzungsmittel (8) einen Abschnitt (33) des Sicherheitsgurtes (31) umfaßt, der gefaltet und durch Nähen befestigt ist, wobei diese Naht so aufgebaut ist, daß sie bei Einwirkung einer vorher festgelegten Kraft und in Reaktion auf ein Signal reißt, das die Entfaltung des weiteren Rückhaltemittels anzeigt.

## Revendications

1. Dispositif de retenue de sécurité des passagers d'un véhicule comprenant un capteur destiné à détecter les conditions indicatrices d'une situation de collision, un premier élément de retenue de sécurité pour limiter les mouvements d'un passager du véhicule par rapport à un véhicule, le premier élément de retenue étant sensible au capteur, un moyen de limitation de la force (8), destiné à limiter la force exercée par le premier élément de retenue au cours de la limitation des mouvements d'un passager, caractérisé en ce que le moyen de limitation de la force (8) est sensible à un signal indicateur du déploiement d'un élément de retenue additionnel, le premier élément de retenue étant une ceinture de sécurité (7, 4, 6) et l'élément de retenue additionnel étant un coussin d'air.

2. Dispositif de retenue de sécurité des passagers d'un véhicule selon la revendication 1, comprenant un loquet pour déployer le moyen de limitation de la force (8), ce loquet étant actionné par le signal indicateur du déploiement de l'élément de retenue additionnel.

3. Dispositif de retenue de sécurité des passagers d'un véhicule selon l'une quel conque des revendications précédentes, comprenant un moyen de dérivation mécanique (34) et un dispositif pour retourner le moyen de dérivation mécanique (34), pour déployer le moyen de limitation de la force (8) en réponse au signal indicateur du déploiement de l'élément de retenue additionnel.

4. Dispositif de retenue de sécurité des passagers d'un véhicule selon la revendication 3, dans lequel le moyen de dérivation mécanique (34) englobe un loquet (35).

5. Dispositif de retenue de sécurité des passagers d'un véhicule selon la revendication 3 ou la revendication 4, dans lequel le moyen de dérivation (34) est agencé de sorte à n'être sous tension qu'en cas de dépassement d'une force prédéterminée.

6. Dispositif de retenue de sécurité des passagers d'un véhicule selon l'une quelconque des revendications précédentes, dans lequel le moyen de limitation de la force (8) est déployé en présence d'une force prédéterminée inférieure à 5 KN.

7. Dispositif de retenue de sécurité des passagers d'un véhicule selon l'une quelconque des revendications précédentes, dans lequel le moyen de limitation de la force comprend un tube déformable (21) et un élément de déformation (2) qui y est monté et agencé de sorte à déformer le tube (21) lors de l'application d'une tension de ceinture prédéterminée, en réponse à un signal indicateur du déploiement de l'élément de retenue additionnel.

8. Dispositif de retenue de sécurité des passagers d'un véhicule selon la revendication 7, dans lequel le moyen de limitation de la force (8) comprend un cliquet (24), destiné à s'engager dans une rainure annulaire (25) pour verrouiller l'élément de déformation (22) dans le tube (21).

9. Dispositif de retenue de sécurité des passagers d'un véhicule selon la revendication 8, dans lequel le cliquet (24) peut être libéré par un dispositif à actionnement électrique ou pyrotechnique (26).

10. Dispositif de retenue de sécurité des passagers d'un véhicule selon l'une quelconque des revendications 2 à 9, dans lequel le moyen de limitation de la force (8) est associé à un point de fixation de la boucle (5) d'une ceinture de sécurité à trois points d'ancrage.

11. Dispositif de retenue de sécurité des passagers d'un véhicule selon l'une quel conque des revendications précédentes, dans lequel l'élément de retenue comprend un moyen de prétension, le moyen de limitation de la force étant incorporé dans le moyen de prétension.

12. Dispositif de retenue de sécurité des passagers d'un véhicule selon l'une quelconque des revendications précédentes, dans lequel le moyen de limitation de la force (8) comprend une partie (33) de la ceinture de sécurité (31) pliée et fixée par couture, cette couture étant agencée de sorte à se déchirer lors de l'exposition à une force prédéterminée et en réponse à un signal indicateur du déploiement de l'élément de retenue additionnel.
